Europäisches Patentamt

European Patent Office

Office européen des brevets

(19)

(11) Publication number: **0 455 365 A2**

# EUROPEAN PATENT APPLICATION

(12)

(21) Application number: 91303249.6

(22) Date of filing: 12.04.91

(51) Int. Cl.⁵: **G11B 7/08, G02B 7/02**

(30) Priority: 16.04.90 US 509393

(43) Date of publication of application:
06.11.91 Bulletin 91/45

(84) Designated Contracting States:
DE FR GB

(71) Applicant: International Business Machines
Corporation
Old Orchard Road
Armonk, N.Y. 10504 (US)

(72) Inventor: Childers, Edwin Ralph
8341 E. Brookwood Drive
Tucson, Arizona 85715 (US)

(74) Representative: Atchley, Martin John
Waldegrave
IBM United Kingdom Limited Intellectual
Property Department Hursley Park
Winchester Hampshire SO21 2JN (GB)

(54) Movable lens support structure having required resonant frequency characteristics.

(57) The present invention relates to a movable lens support structure (10A) comprising an elongated body member, a first plane surface (26A) at one end of the body member, a support for the lens (15) on the first plane surface, a second plane surface (20A) at the other end of the body member located in a plane which extends parallel to and spaced from the plane of the first plane surface, a support on the second plane surface for an indicating device (17) for indicating the position of the body member, and side walls (21) to the body member extending between the first plane surface and the second plane surface.

According to the invention the support structure is characterised in that the edges of the side walls (25) extend continuously in generally straight lines between the plane surfaces.

FIG. 2

EP 0 455 365 A2

The present invention relates to support structures for movable lenses and has a particular application in optical disk data recorders.

Optical disk data recorders use an objective lens to focus a laser or light beam onto a record medium disk for data recording functions and for transmitting a reflected laser or light beam from the record medium to detector apparatus for use in controlling the beam focusing and track seeking and following operations and for data readback. The support structures for such objective lenses have taken various shapes, forms, and designs. These support structures enable the laser or light beam to be moved along a recording track of a disk as well as from one track to an adjacent track. Motion of part of the support structure is used for beam focusing control. An important aspect of any of these support structures is that they exhibit a sufficiently high resonant frequency such that parasitic vibrations do not interfere with either the beam focusing or the track following and seeking operations.

The present invention relates to an objective lens support structure which provides the track following and seeking functions through rotary motions of the structure and the beam focusing control through linear motions of the structure. This general type of objective lens support structure is known in the art. For example US -A- 4,482,988 shows such a support structure wherein an objective lens is supported on a radially extending beam which is rotatable about an axis and is movable parallel to this axis. This patent also shows a tubular cylinder supporting an objective lens having a slightly different arrangement wherein the support is a series of concentric cylinders with the objective lens being positioned off centre from the axis of the cylinders. It is desired to provide a higher performance objective lens support structure not shown in this patent.

US -A- 4,679,903 shows a rotary objective lens support structure having a peripheral vibration damper. It is desired to provide vibration elimination without increasing the inertia of rotation of the objective lens support structure. The objective lens support structure shown in this patent includes a cup-shaped cylinder with radially extending arms for supporting the objective lens. It is desired to provide a simpler support which is mouldable and yet provides high resonant frequency for high performance operations.

US -A- 4,715,024 shows a rotary and axially-movable objective lens support structure in which the objective lens is mounted on a radially extending arm which results in an imbalance in the rotation i.e., all of the inertia is on one radius of the objective lens support structure. It is desired to provide a balanced lens support holder which is of simple construction.

US -A- 4,767,187 shows a balanced objective lens support structure of the rotary type which is also axially slidable. The balancing is achieved through a complex construction which is desired to be avoided.

US -A- 4,790,628 shows a rotary objective lens support structure in which the lens is mounted on an extending radially extending arm. Fig. 9 of this patent shows a gain and phase chart wherein no vibrations are induced into the rotary lens support up to 10,000 Hertz. It is noted that the centre support structure is a relatively large cylinder which adds to the rotational inertia of the objective lens holder. It is desired to provide a more compact objective lens support structure which will facilitate higher frequencies of operation such as above 20,000 Hertz.

US -A- 4,796,248 shows another cylindrical lens support structure for a lens wherein the objective lens is mounted offset from the axis of the cylindrical structure. US -A- 4,817,076 shows another support structure having a large number of items in the assembly which is desired to be avoided.

Japan Published Unexamined Patent Application 60-38738 is another showing of the support structure of US -A- 4,715,024 supra.

The object of the present invention is to provide an improved support structure for a movable lens which has improved resonant frequency characteristics.

The present invention relates to a movable lens support structure comprising an elongated body member, a first plane surface at one end of the body member, a support for the lens on the first plane surface, a second plane surface at the other end of the body member located in a plane which extends parallel to and spaced from the plane of the first plane surface, a support on the second plane surface for an indicating device for indicating the position of the body member, and side walls to the body member extending between the first plane surface and the second plane surface.

According to the invention the support structure is characterised in that the edges of the side walls extend continuously in generally straight lines between the plane surfaces.

In order that the invention may be more readily understood, embodiments will now be described with reference to the accompanying drawings, in which:

Fig. 1 is a perspective view of a prior art objective lens support structure which has constructional features similar to those of an embodiment of the invention to be described,

Fig. 2 is a perspective view of a lens support structure which is an embodiment of the invention,

Fig. 3 is a perspective view of an assemblage of the lens support structure and its base support for providing a objective lens support structure having both beam focusing and track seeking and following directions of motion, and

Fig. 4 is a perspective view of another embodiment of the invention.

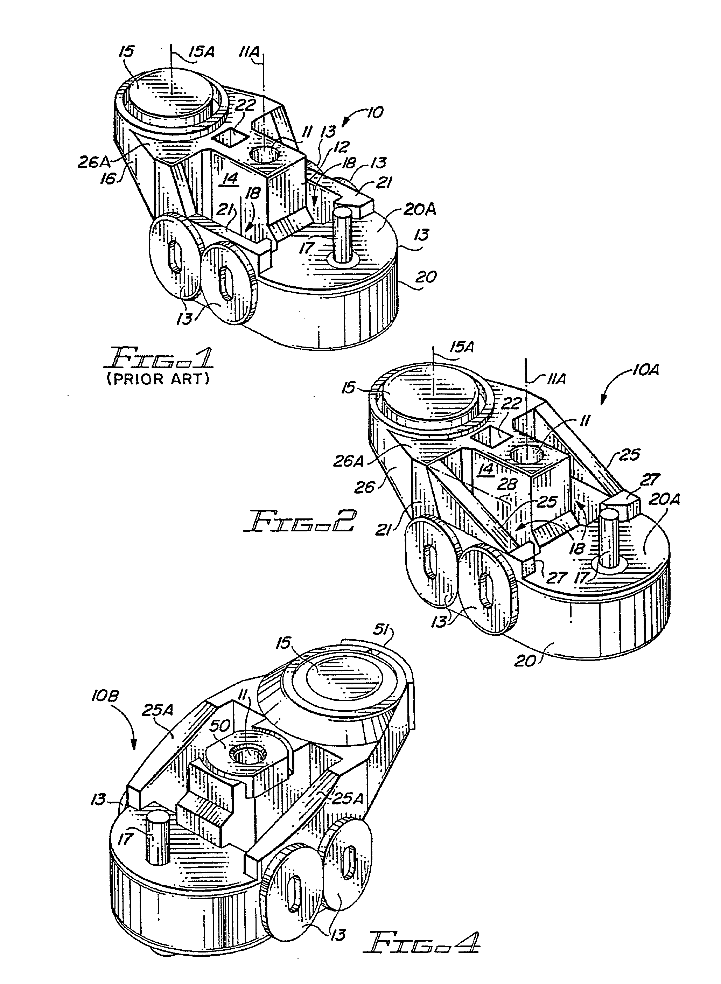

Referring now to the drawings, like numerals indicate like structural features of the various structures illustrated. A prior art objective lens support structure 10 is shown in Fig. 1. The rotary support structure 10 is elongated and generally beam shaped and includes a central axially extending aperture 11 for receiving a pivot pin for enabling rotation of the structure 10 about a pivot axis 11A, as well as providing sliding motion of the structure in the direction of pivot axis 11A for performing focusing operations. A central boss 12 extends transversely of the length of the structure 10. Sets of coils 13 for focusing and tracking are mounted on the longitudinally outwardly facing walls 21 of structure 10. A pair of apertures 18 between central boss 12 and the outer walls 21 are adapted to receive a pair of fixed magnets for co-action with the focusing and tracking coils 13 as described below. Outwardly facing walls 14 of central boss 12 are positioned to allow limited rotational motion of structure 10 relative to the fixed magnets for permitting the tracking functions.

An objective lens 15 having an optical axis 15A extending parallel to pivot axis 11A is mounted in an end portion 16 of the structure 10. The objective lens 15 lies generally in a first plane 26A extending perpendicular to pivot axis 11A. At the opposite end portion 20 of the beam shaped structure 10, an upstanding pin 17 provides for indication of the rotary position of the structure 10 as described below. Upstanding pin 17 is mounted on a second plane 20A which is axially displaced from the first plane 26A in which objective lens 15 lies. This axial offset facilitates moving lens 15 closer to a recording disk contained in a cartridge which is accessed through a window in the cartridge (not shown) for performing data recording and readback operations using a light beam formed by the lens 15. The pair of outer walls 21 and the central hub portion 12 connect the two end portions of the beam shaped structure 10. The axially extending aperture 22 is used to facilitate the moulding of the support structure 10.

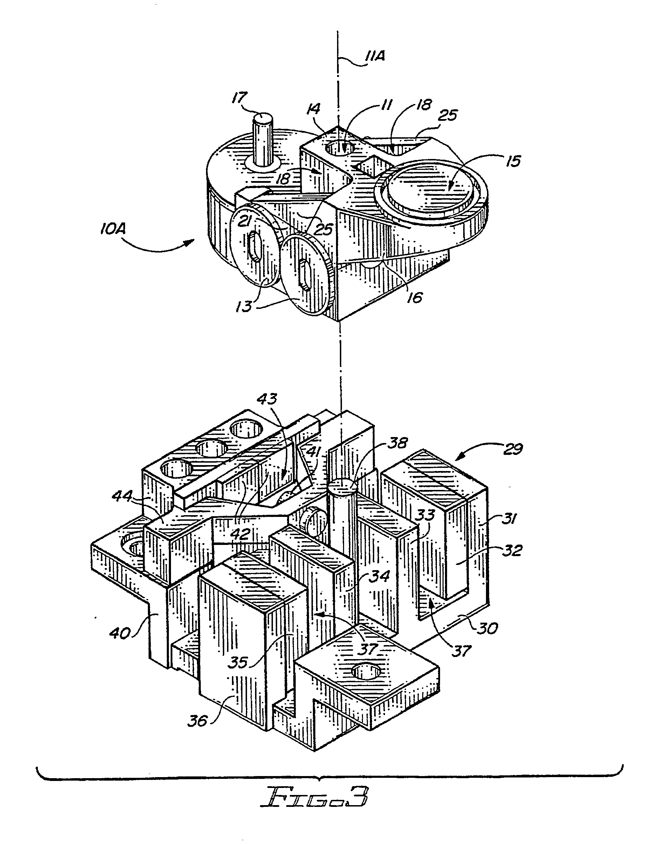

Tests using the structure illustrated in Fig. 1 indicated that the resonant frequency characteristics and other parasitic vibration problems prevented the use of the structure from providing the desired high performance. Later described comparative tests between the structure illustrated in Fig. 1 and the structure to be described with reference to Fig. 2 will show the advantages of using the construction of Fig. 2 over the prior art structure illustrated in Fig. 1.

According to the embodiment of the invention illustrated in Fig. 2 the outer connecting walls 21 are changed by inserting wall portions 25 each having a smooth surface extending from the plane surface 26A of end portion 26 to the plane surface 20A of end portion 20 all as seen in Fig. 2. A pair of bosses 27, which are portions of walls 21, terminate the wall portions 25. Therefore the wall portions 25 terminate in a small axial displacement from plane surface 20A. This displacement from the plane surface 20A was found not to interfere with the reduction of undesired vibrations in the lens support structure 10A. The dashed line box 28 illustrates a rectangle representing an area between the upper plane surface 26A on which is mounted the lens 15 and the upper portion of boss 27 on lower surface 20A. It is seen that wall portions 25 fill up one half of the rectangular area and provide a smooth surface extending between the upper plane surface 26A and lower plane surface 20A on which is mounted the pin 17. Reduction in the vibration in the support structure was provided by the addition of the wall portions 25 which longitudinally extend between the end portion 26 and the end portion 20 of the beam shaped support structure.

Fig. 3 illustrates how the lens support structure 10A as shown in Fig. 2 is mounted on a base support 29. Base support 29 includes a generally E-shaped upwardly-opening magnetically-permeable member 30 having upstanding arms 31, 33, 34, and 36. A pair of magnets 32 and 35 are suitably mounted on the upstanding arms 31 and 36 respectively. Upstanding arms 33 and 34 extend into the two apertures 18 of the structure 10A, respectively. Upstanding pivot pin 38 extends through pivot aperture 11 for providing rotary and axially slidable support to structure 10A. The two gaps 37 between the magnets 32, 35 and the upstanding arms 33, 34, respectively receive the outer connecting walls 21 of the structure 10A. The spacing of the walls 21 and apertures 18 is such that limited rotary motion of the structure 10A is permitted when structure 10A is slidably mounted on pivot pin 38.

A rotary position sensor assembly is mounted on a frame 40 which extends generally parallel to the magnet assembly 31-36. A light emitting diode 41 is mounted so as to project a light beam towards a pair of photo sensing diodes 42. The gap 43 between light emitting diode 41 and the photo sensing diodes 42 receives position indicating pin 17.

The assembly of the apparatus as illustrated in Fig. 3 is performed by first placing the rotary actuator 10A over pivot pin 38, with the position-sensing assembly 40-44 not yet in position. Assembly 40-44 is then added such that position indicating pin 17 goes into gap 43. Note that the lower part of frame 40 is affixed to the magnet assembly 31-36. The portions of 44 supporting diodes 41 and 42 are then affixed to the other components.

Fig. 4 shows a lens support structure 10B which has a beam length shorter than the beam lengths of the structures illustrated in Figs. 1 and 2, i.e. the distances between pivot pin receiving aperture 11, the lens 15 and pin 17 are shortened. This change provides some enhancement in performance but nothing like the performance enhancement by adding walls 25. In the structures illustrated in Figs. 1 and 2, the walls 21, 25 were generally parallel; in the structure illustrated in Fig. 4 walls 25 slant inwardly toward pin 17, and are therefore not parallel. A hardened pivot pin bearing 50 is positioned at one end of pivot pin aperture 11. It can extend the length of the aperture 11 or two such bearings can be used, one at each end portion of the aperture. For enhancing focusing operations, a vibration damper 51 is adhesively secured to the structure 10B adjacent to lens 15. Any resilient adhesive can be used. The damper mass in one embodiment was a lead tape; other materials less toxic may be used.

Comparative tests were performed on the lens support structures of Fig. 1, Fig. 2 and Fig. 4. The base support illustrated in Fig. 3 was rigidly mounted on a twelve millimetre tick aluminium plate for analysis. This provided a well behaved and repeatable test stand so that the dynamics of the illustrates structures could be isolated from the supporting components shown in Fig. 3.

## TABLE

### Support structures of Figs. 1, Fig. 2 and Fig. 4

### Test Results

### (all values are in KHz)

|  | BANDWIDTHS | | RESONANCES | |
|---|---|---|---|---|
|  | FOCUS | TRACKING | FOCUS | TRACKING |
| Structure of Fig. 1 | 1.27 | 3.26 | 201 | 33 |
| Structure of Fig. 2 | 1.53 | 5.64 | 23 | 43.5 |
| Moulded Structure | 1.44 | 4.82 | 23 | 37.5 |
| Structure of Fig. 4 | 1.85 | 5.02 | - No tests - | |

The above figures are averages of 15 structures according to Fig. 1 and 4 structures according to Fig. 2. The Fig. 2 structures had the walls 25 adhesively secured by an epoxy resin. Two moulded structures based on the Fig. 2 structure were used in the tests labelled "molded structure". The Fig. 4 line shows the test result average for 98 test specimen structures of the type illustrated in Fig. 4. Numbers are averages.

## Claims

1. A movable lens support structure (10A) comprising
   an elongated body member,
   a first plane surface (26A) at one end of said body member,

4

a support for said lens (15) on said first plane surface,

a second plane surface (20A) at the other end of said body member located in a plane which extends parallel to and spaced from the plane of said first plane surface,

a support on said second plane surface for an indicating device (17) for indicating the position of said body member, and

side walls (21) to said body member extending between said first plane surface and said second plane surface,

characterised in that

the edges of said side walls (25) extend continuously in generally straight lines between said plane surfaces.

2. A lens support structure as claimed in Claim 1 characterised in that each of said side walls terminates at a point (27) in a plane spaced from the plane of said second plane surface.

3. A lens support structure as claimed in either of the preceding claims characterised in that said side walls extend substantially parallel to each other.

4. A lens support structure as claimed in Claim 1 or Claim 2 characterised in that said side walls extend towards each other.

FIG-1
(PRIOR ART)

FIG-2

FIG-4

FIG-3